# EUROPEAN PATENT APPLICATION

(11) **EP 4 694 365 A1**
(43) Date of publication of application: **11.02.2026**
(21) Application number: 23931544.3
(22) Date of filing: 07.04.2023
(51) Int. Cl.: H04W 52/02

(54) **COMMUNICATION METHOD, ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/087041
(87) International publication number: WO 2024/207483

(57) **Abstract**

The embodiments of the present disclosure relate to the technical field of mobile communications. Provided are a communication method, an electronic device and a storage medium. The communication method is applied to an access point device (AP). The method comprises: determining a first radio frame, wherein the first radio frame comprises first identification information, the first identification information indicates one or more target links for which a traffic identifier-to-link (TID-to-Link) mapping mechanism has been established, and an AP is in a suspended state within a sleep period under the link; and sending the first radio frame. The embodiments of the present disclosure provide a mechanism for supporting power saving of an AP.

## Description

### TECHNICAL FIELD

Embodiments of the present disclosure relate to the field of mobile communication technologies, and in particular, to a communication method, an electronic device, and a storage medium.

### BACKGROUND

Currently, research in Wi-Fi technology, such as Ultra High Reliability (UHR), aims to enhance the reliability of Wireless Local Area Network (WLAN) connections, reduce latency, improve manageability, increase throughput across different Signal-to-Noise Ratio (SNR) levels, and lower device-level power consumption, among other goals. Furthermore, in UHR, to boost system throughput, a communication method enabling simultaneous operation in the sub-7 GHz (Gigahertz) band and the 45 GHz and/or 60 GHz frequency bands has been proposed.

In UHR, power-saving mechanisms will be further enhanced. Therefore, there is a need to provide a mechanism supporting power saving for Access Point (AP) devices.

### SUMMARY

Embodiments of the present disclosure provide a communication method, an electronic device, and a storage medium, for providing a mechanism to support AP power saving.

In an aspect, an embodiment of the present disclosure provides a communication method, which is performed by an access point (AP) device, and the method includes:
determining a first wireless frame, where the first wireless frame includes first identification information, the first identification information indicates one or more target links for which a traffic identifier-to-link (TID-to-Link) mapping mechanism has been established, and the AP is in a suspended state during a sleep period on the link; and
sending the first wireless frame.

In another aspect, an embodiment of the present disclosure provides a communication method, which is performed by a station (STA) device, and the method includes:
receiving a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

In another aspect, an embodiment of the present disclosure further provides an electronic device, which is an access point (AP) device, and includes:
a determination module, configured to determine a first wireless frame, where the first wireless frame includes first identification information, the first identification information indicates one or more target links for which a traffic identifier-to-link (TID-to-Link) mapping mechanism has been established, and the AP is in a suspended state during a sleep period on the link; and
a sending module, configured to send the first wireless frame.

In another aspect, an embodiment of the present disclosure further provides an electronic device, which is a station (STA) device, and includes:
a receiving module, configured to receive a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

An embodiment of the present disclosure further provides an electronic device, which includes a memory, a processor and a computer program stored in the memory and capable of running on the processor, and when the processor executes the program, the method according to one or more embodiments of the present disclosure is implemented.

An embodiment of the present disclosure further provides a computer-readable storage medium, on which a computer program is stored, when the computer program is executed by a processor, the method according to one or more embodiments of the present disclosure is implemented.

In the embodiments of the present disclosure, an AP determines and sends a first wireless frame, where the first wireless frame includes first identification information, the first identification information indicates one or more target links for which a traffic identifier-to-link (TID-to-Link) mapping mechanism has been established, and the AP is in a suspended state during a sleep period on the link. Thus, by using the first identification information to indicate to the STA that the AP remains in a suspended state during the sleep period on the link, data communication between the STA and the AP is avoided. Embodiments of the present disclosure provide a mechanism to support AP power saving.

Additional aspects and advantages of embodiments of the present disclosure will be given in part in the following description, and these will become apparent from the following description, or will be learned through the practice of the present disclosure.

### BRIEF DESCRIPTION OF DRAWINGS

In order to more clearly illustrate technical solutions in embodiments of the present disclosure, a brief introduction will be given below to the accompanying drawings required in the description of the embodiments of the present disclosure. It is evident that the accompanying drawings in the following of description are only some embodiments of the present disclosure. For those of ordinary skill in the art, other accompanying drawings can be obtained based on these accompanying drawings without paying creative labor.
FIG. 1 is a schematic diagram of a first example of an embodiment of the present disclosure.
FIG. 2 is a first flowchart of a communication method according to an embodiment of the present disclosure.
FIG. 3 is a second flowchart of a communication method according to an embodiment of the present disclosure.
FIG. 4 is a first schematic structural diagram of an electronic device according to an embodiment of the present disclosure.
FIG. 5 is a second schematic structural diagram of an electronic device according to an embodiment of the present disclosure.
FIG. 6 is a third schematic structural diagram of an electronic device according to an embodiment of the present disclosure.

### DETAILED DESCRIPTION

Reference will now be made in detail to exemplary embodiments, examples of which are illustrated in the accompanying drawings. When the following description refers to the accompanying drawings, unless otherwise indicated, the same numbers in different accompanying drawings indicate the same or similar elements. Implementations described in the following exemplary embodiments do not represent all implementations consistent with the present disclosure. Rather, they are merely examples of apparatuses and methods consistent with some aspects of the present disclosure as detailed in the appended claims.

Terms used in the embodiments of the present disclosure are only for a purpose of describing specific embodiments, and are not limiting the present disclosure. Singular forms of "a," said," and "the" used in the present disclosure and in the appended claims are also intended to include majority forms, unless the context clearly indicates otherwise. It should also be understood that the term "and/or" as used herein refers to any or all of the possible combinations containing one or more of the listed items in association. For example, A and/or B, which can mean that A exists alone, A and B exist together, and B exists alone. The character "/" generally indicates that the associated object is an "or" relationship. The term "a plurality of" refers to two or more. In view of this, in the embodiments of the present disclosure, "a plurality of" may also be understood as "at least two".

It should be understood that although terms first, second, third, etc. may be used to describe various information in the present disclosure, these information should not be limited to these terms. These terms are used only to distinguish the same type of information from one another. For example, without departing from the scope of the present disclosure, first information may also be named as second information, and similarly, the second information may also be named as the first information. Depending on the context, for example, the word "if" as used herein can be interpreted as "at" or "when" or "in response to determining".

The technical solutions in the embodiments of the present disclosure will be clearly and completely described below in conjunction with the accompanying drawings in the embodiments of the present disclosure. Obviously, the described embodiments are only a part of the embodiments of the present disclosure, but not the whole embodiments. Based on the embodiments in the present disclosure, all other embodiments obtained by those of ordinary skills in the art without making creative efforts belong to the protection scope of the present disclosure.

The embodiments of the present disclosure provide a communication method, an electronic device, and a storage medium, for providing a mechanism to support AP power saving.

The method and the apparatus are based on the same application concept. Because the principle of solving problems is similar, the implementation of the apparatus and the method can be referred to each other, and the repetition is not repeated here.

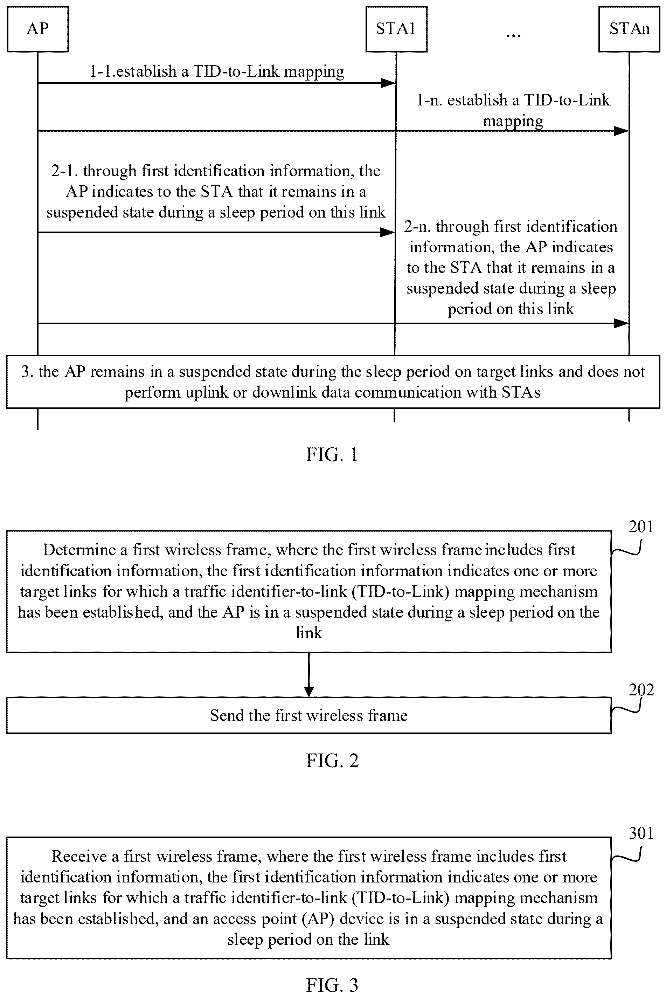

As a first example, refer to FIG. 1, which illustrates an application scenario example of the communication method provided by various embodiments of the present disclosure.

In Step 1-1, an AP establishes a TID-to-Link mapping with STA1.

......

In Step 1-n, the AP establishes a TID-to-Link mapping with STAn.

It should be understood that there is no sequential execution constraint among the various Step 1 operations (Step 1-1 to Step 1-n).

In Step 2-1, the AP uses first identification information to indicate to STA1 that the AP remains in a suspended state during a sleep period on this link.

......

In Step 2-n, the AP uses first identification information to indicate to STAn that the AP remains in a suspended state during a sleep period on this link.

In Step 3, subsequently, the AP remains in a suspended state during the sleep period on target links and does not perform uplink or downlink data communication with STAs.

As shown in FIG. 2, an embodiment of the present disclosure provides a communication method. In some examples, the method may be performed an Access Point (AP) device. In some examples, in this embodiment, the AP may be, for example, a device with wireless-to-wired bridging functionality, responsible for extending services provided by a wired network to a wireless network. A Station (STA) device may be, for example, an electronic device with wireless network access capability, providing frame delivery services to enable information transmission.

The method may include the following steps.

Step 201, determining a first wireless frame, where the first wireless frame includes first identification information, the first identification information indicates one or more target links for which a traffic identifier-to-link (TID-to-Link) mapping mechanism has been established, and the AP is in a suspended state during a sleep period on the link.

Step 202, sending the first wireless frame.

Typically, APs may exist in three forms, such as soft AP (or soft AP MLD), Non-Simultaneous Transmitting and Receiving (NSTR) mobile AP (or NSTR mobile AP MLD), and regular AP (or regular AP MLD), where a regular AP may be, for example, a router. Taking soft APs and NSTR mobile APs as examples, they are usually battery-powered with high power consumption, and their communication with STAs is often not in a long-term continuous state. Therefore, there is a need to provide a mechanism supporting power saving for APs.

In an embodiment of the present disclosure, the AP determines a first wireless frame, where the first wireless frame includes first identification information, the first identification information indicates one or more target links for which a traffic identifier-to-link (TID-to-Link) mapping mechanism has been established, and the AP is in a suspended state during a sleep period on the link.

The target link is a link between the AP and one or more STAs, where the TID-to-Link mapping mechanism has been established (or activated). The first identification information indicates that during a time period specified by sleep periods information of each link, the AP remains in a suspended state on the link. For example, if the sleep periods information of Link1 includes time period 1, during time period 1, AP1 remains in a sleep state on Link1. Even if the TID-to-Link mapping has been activated (under normal circumstances, once TID-to-Link mapping is activated, the STA and AP can perform uplink and downlink communication), the AP remains in a suspended (e.g., suspended or inactive) state during the sleep period on the link and does not perform uplink or downlink data communication with the STA. Thus, by using the first identification information to indicate to the STA that the AP remains in a suspended state during the sleep period on the link, data communication between the STA and the AP can be avoided.

Furthermore, if the AP is an Access Point Multi-Link Device (AP MLD), the sleep periods of the AP on each Link may be independent of each other. For example, during Time Period 1, the AP is in a sleep state on Link1, while on Link2 or Link3, if the current time is not within the sleep period of Link2 or Link3, the AP may not sleep to maintain service data transmission.

In some examples, in the embodiments of the present disclosure, the first wireless frame may be a Beacon frame or a Probe Response frame. The Probe Response frame may be an Unsolicited Probe Response frame.

An embodiment of the present disclosure provides a communication method, which is performed by an access point (AP) device, and the method includes:
determining a first wireless frame, where the first wireless frame includes first identification information, the first identification information indicates one or more target links for which a traffic identifier-to-link (TID-to-Link) mapping mechanism has been established, and the AP is in a suspended state during a sleep period on the link; and
sending the first wireless frame.

The first identification information includes sleep periods information of the AP on the one or more target links. If the AP broadcasts its sleep periods information on one or more links in the first wireless frame, it implicitly indicates to the STA(s) that the AP will remain in a suspended state during the sleep period on these links, thereby preventing the STA(s) from communicating data with the AP.

An embodiment of the present disclosure provides a communication method, which is performed by an access point (AP) device, and the method includes:
determining a first wireless frame, where the first wireless frame includes first identification information, the first identification information indicates one or more target links for which a traffic identifier-to-link (TID-to-Link) mapping mechanism has been established, and the AP is in a suspended state during a sleep period on the link; and
sending the first wireless frame.

The first wireless frame includes sleep periods information of the AP on the one or more target links. The sleep periods information indicates that during the time period specified by the sleep periods information, the AP remains in a sleep state on the corresponding communication link. For example, if the sleep periods information of Link1 includes time period 1, during time period 1, the AP remains in a sleep state on Link1 and does not communicate with the STA, thereby conserving device power. Moreover, the first identification information is included in a TID-to-Link mapping information element of the first wireless frame, i.e., an explicit indication method is adopted by occupying bits in the TID-to-Link mapping information element to serve as the first identification information.

An embodiment of the present disclosure provides a communication method, which is performed by an access point (AP) device, and the method includes:
determining a first wireless frame, where the first wireless frame includes first identification information, the first identification information indicates one or more target links for which a traffic identifier-to-link (TID-to-Link) mapping mechanism has been established, and the AP is in a suspended state during a sleep period on the link; and
sending the first wireless frame.

The first wireless frame includes sleep periods information of the AP on the one or more target links, and the first identification information is included in a TID-to-Link mapping information element of the first wireless frame. As an example, a format of the TID-to-Link mapping information element is shown in Table 1 below.

**Table 1**

| Information Content | Element Identifier (ID) | Length | Element ID Extension | TID-to-Link Control | Mapping Switch Time | Expected Duration | Link Mapping Of TID0 (Optional) | Link Mapping Of TID7 (Optional) |
|---|---|---|---|---|---|---|---|---|
| Octets | 1 | 1 | 1 | 1 or 2 | 0 or 2 | 0 or 3 | 0, 1 or 2 | 0, 1 or 2 |

The first identification information is included in a direction subfield of a TID-to-Link mapping control field of the TID-to-Link mapping information element. Further, a format of the TID-to-Link mapping control field is shown in Table 2 below.

**Table 2**

| Content | Direction | Default Mapping | Mapping Switch Time Present | Expected Duration Present | Link Mapping Size | Reserved | Link Mapping Presence Indicator (Optional) |
|---|---|---|---|---|---|---|---|
| Bits | 2 | 1 | 1 | 1 | 1 | 2 | 0 or 8 |
| Bit Order | B0 to B1 | B2 | B3 | B4 | B5 | B6 to B7 | B8 to B15 |

For example, the direction subfield in the TID-to-Link information element is used by setting it to a value of 3 as the first identification information.

An embodiment of the present disclosure provides a communication method, which is performed by an access point (AP) device, and the method includes:
determining a first wireless frame, where the first wireless frame includes first identification information, the first identification information indicates one or more target links for which a traffic identifier-to-link (TID-to-Link) mapping mechanism has been established, and the AP is in a suspended state during a sleep period on the link; and
sending the first wireless frame.

The first wireless frame includes sleep periods information of the AP on the one or more target links, and the first identification information is included in a TID-to-Link mapping information element of the first wireless frame.

The first identification information is included in a direction subfield of a TID-to-Link mapping control field of the TID-to-Link mapping information element.

The TID-to-Link mapping information element includes suspension duration information for the one or more target links, where a suspension duration refers to a sleep duration of the AP on the link.

The direction subfield is set as a first parameter value, indicating that the suspension duration information is identical to a sleep period duration of the AP on the link. For example, if the first parameter value is set to 3, it indicates that the suspension duration of the AP on the link is the same as the sleep period duration.

An embodiment of the present disclosure provides a communication method, which is performed by an access point (AP) device, and the method includes:
determining a first wireless frame, where the first wireless frame includes first identification information, the first identification information indicates one or more target links for which a traffic identifier-to-link (TID-to-Link) mapping mechanism has been established, and the AP is in a suspended state during a sleep period on the link; and
sending the first wireless frame.

The first wireless frame includes sleep periods information of the AP on the one or more target links, and the first identification information is included in a TID-to-Link mapping information element of the first wireless frame. The first identification information is included in a direction subfield of a TID-to-Link mapping control field of the TID-to-Link mapping information element.

The TID-to-Link mapping information element includes suspension duration information for the one or more target links. The direction subfield is set as a first parameter value, indicating that the suspension duration information is identical to a sleep period duration of the AP on the link.

The TID-to-Link mapping information element includes suspension duration information for the target links, and the TID-to-Link mapping information element further includes time offset information for each of the target links, where the time offset information takes a time of sending the first wireless frame as a time reference point.

Taking the currently active link of the AP as Link1 as an example, the TID-to-Link mapping information element may include sleep periods information for Link1, as well as sleep periods information for other Links, such as sleep periods information for Link2 and sleep periods information for Link3. Moreover, the TID-to-Link mapping information element further includes time offset information for each of the target links, for example, time offset information for Link2 and Link3, and the time offset information takes a time of sending the first wireless frame as a time reference point, for example, a time of Link1 as the time reference point.

In addition, if there is no time offset information, the STA or the Non-AP MLD determines the time information when the target link is suspended according to the sleep period broadcast by the AP in the first wireless frame.

An embodiment of the present disclosure provides a communication method, which is performed by an access point (AP) device, and the method includes:
determining a first wireless frame, where the first wireless frame includes first identification information, the first identification information indicates one or more target links for which a traffic identifier-to-link (TID-to-Link) mapping mechanism has been established, and the AP is in a suspended state during a sleep period on the link; and
sending the first wireless frame.

When the AP is in an awake state on the target link, the target link is in a resumed state or an enable state, and uplink and downlink communication can be performed with the STA.

An embodiment of the present disclosure provides a communication method, which is performed by an access point (AP) device, and the method includes:
determining a first wireless frame, where the first wireless frame includes first identification information, the first identification information indicates one or more target links for which a traffic identifier-to-link (TID-to-Link) mapping mechanism has been established, and the AP is in a suspended state during a sleep period on the link; and
sending the first wireless frame.

In some examples, the first identification information includes sleep periods information of the AP on the one or more target links;
or,
the first wireless frame includes sleep periods information of the AP on the one or more target links, and the first identification information is included in a TID-to-Link mapping information element of the first wireless frame.

In some examples, the first identification information is included in a direction subfield of a TID-to-Link mapping control field of the TID-to-Link mapping information element.

In some examples, the TID-to-Link mapping information element includes suspension duration information for the one or more target links;
the direction subfield is set as a first parameter value, indicating that the suspension duration information is identical to a sleep period duration of the AP on the link.

In some examples, the TID-to-Link mapping information element includes suspension duration information for the target links, and the TID-to-Link mapping information element further includes time offset information for each of the target links, where the time offset information takes a time of sending the first wireless frame as a time reference point.

In some examples, the AP is in an awake state on the target link, and the target link is in a resumed state or an enable state.

In some examples, the first wireless frame includes a Beacon frame or a Probe Response frame.

In the embodiments of the present disclosure, an AP determines and sends a first wireless frame, where the first wireless frame includes first identification information, the first identification information indicates one or more target links for which a traffic identifier-to-link (TID-to-Link) mapping mechanism has been established, and the AP is in a suspended state during a sleep period on the link. Thus, by using the first identification information to indicate to the STA that the AP remains in a suspended state during the sleep period on the link, data communication between the STA and the AP is avoided. Embodiments of the present disclosure provide a mechanism to support AP power saving.

Referring to FIG. 3, an embodiment of the present disclosure provides a communication method. In some examples, the method may be performed by a station (STA) device, and the method may include the following step.

Step 301, receiving a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

Typically, APs may exist in three forms, such as soft AP (or soft AP MLD), Non-Simultaneous Transmitting and Receiving (NSTR) mobile AP (or NSTR mobile AP MLD), and regular AP (or regular AP MLD), where a regular AP may be, for example, a router. Taking soft APs and NSTR mobile APs as examples, they are usually battery-powered with high power consumption, and their communication with STAs is often not in a long-term continuous state. Therefore, there is a need to provide a mechanism supporting power saving for APs.

In the embodiment of the present disclosure, the STA receives a first wireless frame and acquires first identification information included in the first wireless frame, the first identification information indicates one or more target links for which a TID-to-Link mapping mechanism has been established, and the AP is in a suspended state during a sleep period on the link.

The target link is a link between the AP and one or more STAs, where the TID-to-Link mapping mechanism has been established (or activated). The first identification information indicates that during a time period specified by sleep periods information of each link, the AP remains in a suspended state on the link. For example, if the sleep periods information of Link1 includes time period 1, during time period 1, AP1 remains in a sleep state on Link1. Even if the TID-to-Link mapping has been activated (under normal circumstances, once TID-to-Link mapping is activated, the STA and AP can perform uplink and downlink communication), the AP remains in a suspended (e.g., suspended or inactive) state during the sleep period on the link and does not perform uplink or downlink data communication with the STA. Thus, by using the first identification information to indicate to the STA that the AP remains in a suspended state during the sleep period on the link, data communication between the STA and the AP can be avoided.

Furthermore, if the AP is an Access Point Multi-Link Device (AP MLD), the sleep periods of the AP on each Link may be independent of each other. For example, during Time Period 1, the AP is in a sleep state on Link1, while on Link2 or Link3, if the current time is not within the sleep period of Link2 or Link3, the AP may not sleep to maintain service data transmission.

In some examples, in the embodiments of the present disclosure, the first wireless frame may be a Beacon frame or a Probe Response frame. The Probe Response frame may be an Unsolicited Probe Response frame.

An embodiment of the present disclosure provides a communication method. In some examples, the method may be performed by a station (STA) device, and the method may include:

receiving a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

The first identification information includes sleep periods information of the AP on the one or more target links. If the AP broadcasts its sleep periods information on one or more links in the first wireless frame, it implicitly indicates to the STA(s) that the AP will remain in a suspended state during the sleep period on these links, thereby preventing the STA(s) from communicating data with the AP.

An embodiment of the present disclosure provides a communication method. In some examples, the method may be performed by a station (STA) device, and the method may include:
receiving a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

The first wireless frame includes sleep periods information of the AP on the one or more target links. The sleep periods information indicates that during the time period specified by the sleep periods information, the AP remains in a sleep state on the corresponding communication link. For example, if the sleep periods information of Link1 includes time period 1, during time period 1, the AP remains in a sleep state on Link1 and does not communicate with the STA, thereby conserving device power. Moreover, the first identification information is included in a TID-to-Link mapping information element of the first wireless frame, i.e., an explicit indication method is adopted by occupying bits in the TID-to-Link mapping information element to serve as the first identification information.

An embodiment of the present disclosure provides a communication method. In some examples, the method may be performed by a station (STA) device, and the method may include the following step.
receiving a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

The first wireless frame includes sleep periods information of the AP on the one or more target links, and the first identification information is included in a TID-to-Link mapping information element of the first wireless frame. As an example, a format of the TID-to-Link mapping information element is shown in Table 1 below.

**Table 1**

| Information Content | Element Identifier (ID) | Length | Element ID Extension | TID-to-Link Control | Mapping Switch Time | Expected Duration | Link Mapping Of TID0 (Optional) | Link Mapping Of TID7 (Optional) |
|---|---|---|---|---|---|---|---|---|
| Octets | 1 | 1 | 1 | 1 or 2 | 0 or 2 | 0 or 3 | 0, 1 or 2 | 0, 1 or 2 |

The first identification information is included in a direction subfield of a TID-to-Link mapping control field of the TID-to-Link mapping information element. Further, a format of the TID-to-Link mapping control field is shown in Table 2 below.

**Table 2**

| Content | Direction | Default Mapping | Mapping Switch Time Present | Expected Duration Present | Link Mapping Size | Reserved | Link Mapping Presence Indicator (Optional) |
|---|---|---|---|---|---|---|---|
| Bits | 2 | 1 | 1 | 1 | 1 | 2 | 0 or 8 |
| Bit Order | B0 to B1 | B2 | B3 | B4 | B5 | B6 to B7 | B8 to B15 |

For example, the direction subfield in the TID-to-Link information element is used by setting it to a value of 3 as the first identification information.

An embodiment of the present disclosure provides a communication method. In some examples, the method may be performed by a station (STA) device, and the method may include:
receiving a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

The first wireless frame includes sleep periods information of the AP on the one or more target links, and the first identification information is included in a TID-to-Link mapping information element of the first wireless frame.

The first identification information is included in a direction subfield of a TID-to-Link mapping control field of the TID-to-Link mapping information element.

The TID-to-Link mapping information element includes suspension duration information for the one or more target links, where a suspension duration refers to a sleep duration of the AP on the link.

The direction subfield is set as a first parameter value, indicating that the suspension duration information is identical to a sleep period duration of the AP on the link. For example, if the first parameter value is set to 3, it indicates that the suspension duration of the AP on the link is the same as the sleep period duration.

An embodiment of the present disclosure provides a communication method. In some examples, the method may be performed by a station (STA) device, and the method may include:
receiving a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

The first wireless frame includes sleep periods information of the AP on the one or more target links, and the first identification information is included in a TID-to-Link mapping information element of the first wireless frame. The first identification information is included in a direction subfield of a TID-to-Link mapping control field of the TID-to-Link mapping information element.

The TID-to-Link mapping information element includes suspension duration information for the one or more target links. The direction subfield is set as a first parameter value, indicating that the suspension duration information is identical to a sleep period duration of the AP on the link.

The TID-to-Link mapping information element includes suspension duration information for the target links, and the TID-to-Link mapping information element further includes time offset information for each of the target links, where the time offset information takes a time of sending the first wireless frame as a time reference point.

Taking the currently active link of the AP as Link1 as an example, the TID-to-Link mapping information element may include sleep periods information for Link1, as well as sleep periods information for other Links, such as sleep periods information for Link2 and sleep periods information for Link3. Moreover, the TID-to-Link mapping information element further includes time offset information for each of the target links, for example, time offset information for Link2 and Link3, and the time offset information takes a time of sending the first wireless frame as a time reference point, for example, a time of Link1 as the time reference point.

In addition, if there is no time offset information, the STA or the Non-AP MLD determines the time information when the target link is suspended according to the sleep period broadcast by the AP in the first wireless frame.

An embodiment of the present disclosure provides a communication method. In some examples, the method may be performed by a station (STA) device, and the method may include:
receiving a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

When the AP is in an awake state on the target link, the target link is in a resumed state or an enable state, and uplink and downlink communication can be performed with the STA.

An embodiment of the present disclosure provides a communication method. In some examples, the method may be performed by a station (STA) device, and the method may include:
receiving a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

In some examples, the first identification information includes sleep periods information of the AP on the one or more target links;
or,
the first wireless frame includes sleep periods information of the AP on the one or more target links, and the first identification information is included in a TID-to-Link mapping information element of the first wireless frame.

In some examples, the first identification information is included in a direction subfield of a TID-to-Link mapping control field of the TID-to-Link mapping information element; and
the direction subfield is set to a first parameter value, indicating that the TID-to-Link mapping information element is a TID-to-Link mapping information element.

In some examples, the TID-to-Link mapping information element includes suspension duration information for the one or more target links;
the direction subfield is set as a first parameter value, indicating that the suspension duration information is identical to a sleep period duration of the AP on the link.

In some examples, the TID-to-Link mapping information element includes suspension duration information for the target links, and the TID-to-Link mapping information element further includes time offset information for each of the target links, where the time offset information takes a time of sending the first wireless frame as a time reference point.

In some examples, the AP is in an awake state on the target link, and the target link is in a resumed state or an enable state.

In some examples, the first wireless frame includes a Beacon frame or a Probe Response frame.

In the embodiments of the present disclosure, the STA receives a first wireless frame, and acquires first identification information included in the first wireless frame, the first identification information indicates one or more target links for which a TID-to-Link mapping mechanism has been established, and the AP is in a suspended state during a sleep period on the link. Thus, the STA determines through the first identification information that the AP is still in a suspended state during the sleep period on the link to prevent the AP from performing data communication. Embodiments of the present disclosure provide a mechanism to support AP power saving.

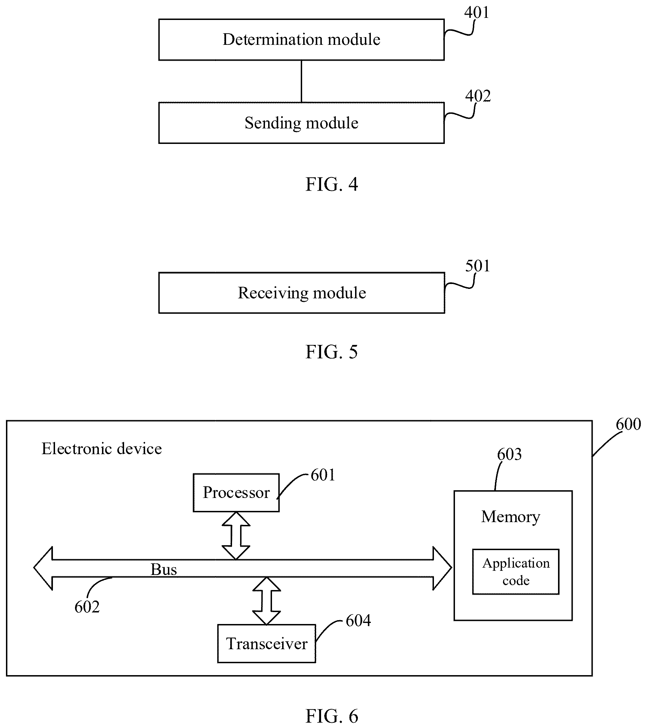

Referring to FIG. 4, based on the same principles as the method provided by the embodiments of the present disclosure, an embodiment of the present disclosure further provides an electronic device, which is an access point (AP) device. The electronic device includes:
a determination module 401, configured to determine a first wireless frame, where the first wireless frame includes first identification information, the first identification information indicates one or more target links for which a traffic identifier-to-link (TID-to-Link) mapping mechanism has been established, and the AP is in a suspended state during a sleep period on the link; and
a sending module 402, configured to send the first wireless frame.

In some examples, the first identification information includes sleep periods information of the AP on the one or more target links;
or,
the first wireless frame includes sleep periods information of the AP on the one or more target links, and the first identification information is included in a TID-to-Link mapping information element of the first wireless frame.

In some examples, the first identification information is included in a direction subfield of a TID-to-Link mapping control field of the TID-to-Link mapping information element.

In some examples, the TID-to-Link mapping information element includes suspension duration information for the one or more target links;
the direction subfield is set as a first parameter value, indicating that the suspension duration information is identical to a sleep period duration of the AP on the link.

In some examples, the TID-to-Link mapping information element includes suspension duration information for the target links, and the TID-to-Link mapping information element further includes time offset information for each of the target links, where the time offset information takes a time of sending the first wireless frame as a time reference point.

In some examples, the AP is in an awake state on the target link, and the target link is in a resumed state or an enable state.

In some examples, the first wireless frame includes a Beacon frame or a Probe Response frame.

An embodiment of the present disclosure further provides a communication apparatus, which is applied to an access point (AP) device, and the apparatus includes:
a wireless frame determination module, configured to determine a first wireless frame, where the first wireless frame includes first identification information, the first identification information indicates one or more target links for which a traffic identifier-to-link (TID-to-Link) mapping mechanism has been established, and the AP is in a suspended state during a sleep period on the link; and
a wireless frame sending module, configured to send the first wireless frame.

The apparatus further includes other modules of the electronic device of the preceding embodiment, which will not be repeated here.

Referring to FIG. 5, based on the same principles as the method provided by the embodiments of the present disclosure, an embodiment of the present disclosure further provides an electronic device, which is a station (STA) device. The electronic device includes:

a receiving module 501, configured to receive a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

In some examples, the first identification information includes sleep periods information of the AP on the one or more target links;
or,
the first wireless frame includes sleep periods information of the AP on the one or more target links, and the first identification information is included in a TID-to-Link mapping information element of the first wireless frame.

In some examples, the first identification information is included in a direction subfield of a TID-to-Link mapping control field of the TID-to-Link mapping information element; and
the direction subfield is set to a first parameter value, indicating that the TID-to-Link mapping information element is a TID-to-Link mapping information element.

In some examples, the TID-to-Link mapping information element includes suspension duration information for the one or more target links;
the direction subfield is set as a first parameter value, indicating that the suspension duration information is identical to a sleep period duration of the AP on the link.

In some examples, the TID-to-Link mapping information element includes suspension duration information for the target links, and the TID-to-Link mapping information element further includes time offset information for each of the target links, where the time offset information takes a time of sending the first wireless frame as a time reference point.

In some examples, the AP is in an awake state on the target link, and the target link is in a resumed state or an enable state.

In some examples, the first wireless frame includes a Beacon frame or a Probe Response frame.

An embodiment of the present disclosure further provides a communication apparatus, which is applied to a station (STA) device, and the apparatus includes:
a wireless frame receiving module, configured to receive a first wireless frame, where the first wireless frame includes first identification information, the first identification information indicates one or more target links for which a traffic identifier-to-link (TID-to-Link) mapping mechanism has been established, and an access point (AP) device is in a suspended state during a sleep period on the link.

The apparatus further includes other modules of the electronic device of the preceding embodiment, which will not be repeated here.

In an optional embodiment, embodiments of the present disclosure further provide an electronic device, as shown in FIG. 6. The electronic device 600 shown in FIG. 6 may be a server, including: a processor 601 and a memory 603. The processor 601 and the memory 603 are connected, for example, via a bus 602. In some examples, the electronic device 600 may further include a transceiver 604. It should be noted that there is not only one transceiver 604 in practical application, and the structure of the electronic device 600 does not constitute a limitation to the embodiment of the present disclosure.

The processor 601 may be a central processing unit (CPU), a general-purpose processor, a digital signal processor (DSP), an application specific integrated circuit (ASIC), a field programmable gate array (FPGA) or other programmable logic devices, transistor logic devices, hardware components or any combination thereof. Which may implement or perform various illustrative logical blocks, modules, and circuits described in connection with the present disclosure. The processor 601 can also be a combination that realizes computing functions, for example, including one or more microprocessor combinations, DSP and microprocessor combinations, etc.

The bus 602 may include a pathway to transmit information between the components described above. The bus 602 may be a peripheral component interconnect (PCI) bus or an extended industry standard architecture (EISA) bus, etc. The bus 602 may be divided into address bus, data bus, control bus, etc. For convenience of representation, only one thick line is used in FIG. 6, but it does not mean that there is only one bus or one type of bus.

The memory 603 may be a read only memory (ROM) or other types of static storage devices that can store static information and instructions, a random access memory (RAM) or other types of dynamic storage devices that can store information and instructions, as well as an electrically erasable programmable read only memory (EEPROM), a compact disc read only memory (CD-ROM) or other optical disc storage, optical disc storage (including compact disc, laser disc, optical disc, digital versatile disc, Blu-ray disc, etc.), magnetic disc storage medium or other magnetic storage devices, or any other medium that can be used to carry or store desired program codes in the form of instructions or data structures and can be accessed by a computer, but is not limited to this.

The memory 603 is configured to store application code for executing the solution of the present disclosure, and the execution is controlled by the processor 601. The processor 601 is configured to execute the application code stored in the memory 603, so as to realize the contents shown in the foregoing method embodiments.

The electronic device includes but is not limited to a mobile terminal such as a mobile phone, a laptop computer, a digital broadcast receiver, a Personal Digital Assistant (PDA), a PAD (tablet computer), a Portable Multimedia Player (PMP), an in-vehicle terminal (e.g., an in-car navigation terminal), etc., as well as a fixed terminal such as a digital TV or a desktop computer. The electronic device illustrated in FIG. 6 is merely an example and should not impose any limitations on the functionality and scope of use of embodiments of the present disclosure.

The server provided by the present disclosure may be a stand-alone physical server, a server cluster or distributed system including a plurality of physical servers, and a cloud server providing basic cloud computing services such as cloud services, cloud database, cloud computing, cloud functions, cloud storage, network services, cloud communications, middleware services, domain name services, security services, CDNs, and big data and artificial intelligence platforms. The terminal may be a smart phone, a tablet computer, a notebook computer, a desktop computer, a smart speaker, a smart watch, etc., but it is not limited to this. The terminal as well as the server may be connected directly or indirectly via wired or wireless communication, and the present disclosure is not limited herein.

An embodiment of that present disclosure provides a computer-readable storage medium, on which a computer program is store, which, when run on a computer, enables the computer to execute the corresponding contents of the foregoing method embodiments.

It should be understood that although the various steps in the flowchart of the accompanying drawings are shown sequentially as indicated by the arrows, the steps are not necessarily performed sequentially in the order indicated by the arrows. Unless explicitly stated herein, the execution of these steps is not strictly limited in order, and they can be executed in other orders. Moreover, at least a part of the steps in the flowchart of the accompanying drawings may include a plurality of sub-steps or stages, which may not necessarily be completed at the same time, but may be executed at different times, and the execution order may not necessarily be sequential, but may be executed alternately or alternatively with other steps or at least a part of sub-steps or stages of other steps.

It should be noted that the computer-readable medium mentioned above in the present disclosure may be a computer-readable signal medium or a computer-readable storage medium or any combination thereof. The computer-readable storage medium may be, for example, but is not limited to, a system, an apparatus or a device of electricity, magnetism, optics, electromagnetism, infrared rays, or semiconductors, or any combination thereof. More specific examples of the computer-readable storage medium may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program that may be used by or in combination with an instruction execution system, apparatus, or device. Whereas, in the present disclosure, a computer-readable signal medium may include a data signal propagated in a baseband or as part of a carrier carrying computer-readable program code. Such propagated data signals may take a variety of forms, including, but not limited to, electromagnetic signals, optical signals, or any suitable combination of the foregoing. The computer-readable signal medium may further be any computer-readable medium other than a computer-readable storage medium that can send, propagate, or transmit a program for use by or in connection with an instruction execution system, apparatus, or device. The program code contained on the computer-readable medium may be transmitted by any suitable medium, including, but not limited to: wire, fiber optic cable, RF (radio frequency), etc., or any suitable combination of the foregoing.

The computer-readable medium may be included in the electronic device; or it may be separate and not assembled into such electronic device.

The computer-readable medium carries one or more programs, which, when executed by the electronic device, cause the electronic device to perform the method shown in the above embodiments.

According to an aspect of the present disclosure, a computer program product or computer program is provided, which includes computer instructions stored in a computer-readable storage medium. A processor of a computer device reads the computer instructions from the computer-readable storage medium, and the processor executes the computer instructions, so that the computer device performs the methods provided in the various optional implementations described above.

Computer program codes for performing the operations of the present disclosure may be written in one or more programming languages or combinations thereof, including object-oriented programming languages such as Java, Smalltalk, C++, and conventional procedural programming languages such as "C" or similar programming languages. The program code can be completely executed on the user's computer, partially executed on the user's computer, executed as an independent software package, partially executed on the user's computer and partially executed on a remote computer, or completely executed on a remote computer or server. In the case involving a remote computer, the remote computer may be connected to a user computer through any kind of network, including a local area network (LAN) or a wide area network (WAN), or may be connected to an external computer (for example, through the Internet using an Internet service provider).

The flowcharts and block diagrams in the accompanying drawings illustrate the architecture, functionality, and operation of systems, methods, and computer program products that may be implemented in accordance with various embodiments of the present disclosure. In this regard, each block in the flowchart or block diagram may represent a module, a program segment, or a part of code that contains one or more executable instructions for implementing specified logical functions. It should also be noted that in some implementations as replacements, the functions indicated in the blocks may also occur in a different order than indicated in the accompanying drawings. For example, two blocks shown in succession may actually be executed substantially in parallel, and they may sometimes be executed in the reverse order, depending on the functions involved. It should also be noted that each block in the block diagrams and/or flowcharts, and combinations of blocks in the block diagrams and/or flowcharts, can be implemented by a dedicated hardware-based system that performs specified functions or operations, or by a combination of dedicated hardware and computer instructions.

The modules described in the embodiments of the present disclosure may be realized by software or hardware. The name of a module does not, in some cases, constitute a limitation on the module itself. For example, module A may also be described as "module A for performing operation B".

The above description is only the preferred embodiments of the present disclosure and the explanation of the applied technical principles. It should be understood by those skilled in the art that the scope of the disclosure involved in the present disclosure is not limited to the technical solution formed by a particular combination of the above technical features, but should also cover other technical solutions formed by any combination of the above technical features or their equivalent features without departing from the above disclosure concept. For example, a technical solution formed by interchanging the above features with (but not limited to) technical features having similar functions disclosed in the present disclosure.

## Claims

1. A communication method, performed by an access point (AP) device and comprising:
determining a first wireless frame, wherein the first wireless frame comprises first identification information, the first identification information indicates one or more target links for which a traffic identifier-to-link (TID-to-Link) mapping mechanism has been established, and the AP is in a suspended state during a sleep period on the link; and
sending the first wireless frame.

2. The communication method according to claim 1, wherein
the first identification information comprises sleep periods information of the AP on the one or more target links; or,
the first wireless frame comprises sleep periods information of the AP on the one or more target links, and the first identification information is comprised in a TID-to-Link mapping information element of the first wireless frame.

3. The communication method according to claim 2, wherein the first identification information is comprised in a direction subfield of a TID-to-Link mapping control field of the TID-to-Link mapping information element.

4. The communication method according to claim 3, wherein
the TID-to-Link mapping information element comprises suspension duration information for the one or more target links; and
the direction subfield is set as a first parameter value, indicating that the suspension duration information is identical to a sleep period duration of the AP on the link.

5. The communication method according to claim 4, wherein the TID-to-Link mapping information element comprises suspension duration information for the target links, and the TID-to-Link mapping information element further comprises time offset information for each of the target links, wherein the time offset information takes a time of sending the first wireless frame as a time reference point.

6. The communication method according to claim 1, wherein the AP is in an awake state on the target link, and the target link is in a resumed state or an enable state.

7. The communication method according to any one of claims 1 to 6, wherein the first wireless frame comprises a beacon frame or a probe response frame.

8. A communication method, performed by a station (STA) device and comprising:
receiving a first wireless frame, wherein the first wireless frame comprises first identification information, the first identification information indicates one or more target links for which a traffic identifier-to-link (TID-to-Link) mapping mechanism has been established, and an access point (AP) device is in a suspended state during a sleep period on the link.

9. The communication method according to claim 8, wherein
the first identification information comprises sleep periods information of the AP on the one or more target links; or,
the first wireless frame comprises sleep periods information of the AP on the one or more target links, and the first identification information is comprised in a TID-to-Link mapping information element of the first wireless frame.

10. The communication method according to claim 9, wherein
the first identification information is comprised in a direction subfield of a TID-to-Link mapping control field of the TID-to-Link mapping information element; and
the direction subfield is set to a first parameter value, indicating that the TID-to-Link mapping information element is a TID-to-Link mapping information element.

11. The communication method according to claim 10, wherein
the TID-to-Link mapping information element comprises suspension duration information for the one or more target links; and
the direction subfield is set as a first parameter value, indicating that the suspension duration information is identical to a sleep period duration of the AP on the link.

12. The communication method according to claim 11, wherein the TID-to-Link mapping information element comprises suspension duration information for the target links, and the TID-to-Link mapping information element further comprises time offset information for each of the target links, wherein the time offset information takes a time of sending the first wireless frame as a time reference point.

13. The communication method according to claim 8, wherein the AP is in an awake state on the target link, and the target link is in a resumed state or an enable state.

14. The communication method according to any one of claims 8 to 13, wherein the first wireless frame comprises a beacon frame or a probe response frame.

15. An electronic device, being an access point (AP) device and comprising:
a determination module, configured to determine a first wireless frame, wherein the first wireless frame comprises first identification information, the first identification information indicates one or more target links for which a traffic identifier-to-link (TID-to-Link) mapping mechanism has been established, and the AP is in a suspended state during a sleep period on the link; and
a sending module, configured to send the first wireless frame.

16. An electronic device, being a station (STA) device and comprising:
a receiving module, configured to receive a first wireless frame, wherein the first wireless frame comprises first identification information, the first identification information indicates one or more target links for which a traffic identifier-to-link (TID-to-Link) mapping mechanism has been established, and an access point (AP) device is in a suspended state during a sleep period on the link.

17. An electronic device, comprising: a memory, at least one processor and a computer program stored in the memory and executable on the at least one processor, wherein the at least one processor, when executing the program, cause the at least one processor to perform the method according to any one of claims 1 to 7 or any one of claims 8 to 14.

18. A computer-readable storage medium, wherein a computer program is stored on the computer-readable storage medium, and the computer program, when executed by at least one processor, cause the at least one processor to perform the method according to any one of claims 1 to 7 or any one of claims 8 to 14.
